# EUROPEAN PATENT SPECIFICATION

(11) **EP 3 772 648 B1**
(45) Date of publication and mention of the grant of the patent: **27.03.2024**
(21) Application number: 19190582.7
(22) Date of filing: 07.08.2019
(51) Int. Cl.: G01N 30/08, G01N 30/40

(54) **GAS ANALYSIS SYSTEM AND METHOD**
GASANALYSESYSTEM UND -VERFAHREN
SYSTÈME ET PROCÉDÉ D'ANALYSE DE GAZ

(43) Date of publication of application: 10.02.2021
(73) Proprietor: Geoservices Equipements SAS, 92140 Clamart (FR)
(72) Inventor: DELACOUX DES ROSEAUX, Martin, 92140 CLAMART (FR); KASPRZYKOWSKI, Pawel, 92140 CLAMART (FR)
(74) Representative: Schlumberger Intellectual Property Department

(56) References cited:
- EP-A1- 0 654 667
- US-A- 3 444 722
- US-A- 5 392 634
- US-A- 5 652 398
- US-B2- 8 677 814

## Description

### BACKGROUND

The disclosure relates to a system and method for performing gas analysis of a gas sample, in particular for analyzing gas sample at a well site.

Gas chromatography technique has a wide range of application in petroleum industry. From the exploration of crude oil and refining of finished products to research on new petrochemicals. One of the most common application are analysis of light hydrocarbons (commonly alkanes from the range of C1 to C8, in particular C1 to C5) during drilling.

Hydrocarbon gasses that are a result of drilling a specific interval of a well, travel to the surface with a circulated drilling fluid (mud). When reaching an exit of the well they are being extracted from the mud and transported through a gas line to the analysis unit - gas chromatograph (GC) usually located in a mud logging unit. Within the analyzer, known and constant volume of gas sample is being injected into chromatographic column in which different gas species are being separated in time. After leaving the column sample is passing through a detector, amounts and compositions of gases can be recorded and quantified.

Results are commonly used for evaluating hydrocarbon potential of the formation. In general, the greater the amount of heavier hydrocarbons (particularly C4 and C5), the greater the potential of oil production from this zone. Additionally, various gas ratios are being analyzed for a purpose of cross-check lag time calculation, discriminate among different formations, identify possible "richness trends", identify fluid content, provide stratigraphic correlations, and pay zone (sweet spot) indication.

Chromatographic analysis as such need to be fast (due to the pace of drilling) and at least shorter than one minute per chromatographic cycle, when being in continuous analysis mode. The shorter the chromatographic cycle time, the better the vertical resolution of the gas measurement is. Moreover if rate of penetration increases importance of fast cycling GC increases.

US5392634 describes a hydrocarbon analyzer for rapidly measuring both methane and nonmethane hydrocarbons. The analyzer includes a nonmethane hydrocarbon absorbing first column connected in series with a methane absorbing second column. A sample gas is propelled in a carrier gas through a carrier gas line into the first and second columns via a change-over valve for switching between a branched line severably connected between the carrier gas line and a first flame ionization detector for measuring nonmethane hydrocarbons and a second flame ionization detector connected to the second column for measuring methane. The change-over valve switches from a gas sample introducing position to a backflush position so that the sample gas is introduced into the first nonmethane hydrocarbon absorbing column where the nonmethane hydrocarbons are absorbed and the methane is transferred to the second methane absorbing column prior to backflushing the carrier gas to elute the absorbed hydrocarbons which are directed to the first and second hydrogen flame ionization detectors. US5652398 describes a fixed-volume injector assembly having backflush capability for injecting a sample into a gas chromatograph. The injector assembly is designed to connect to a precolumn and analytical column (20) so that, in a backflush mode, precolumn is backflushed.

### SUMMARY

The disclosure relates to a gas analysis system as defined in claim 1. Preferred embodiments of the system are defined in claims 2 to 8.

In another aspect, the invention resides in a drilling installation as defined in claim 9.

The invention further resides in a method for operating the gas analysis system of claim 1 as defined in claim 10. Preferred embodiments of the method are defined in claims 11 and 12.

The fluidic management system having independent management of the precut backflushing and main column separation, it enables to perform several operations simultaneously. The system and method here address the need for fast compositional analysis of a gas sample and allows for significant cycle time reduction in a comparison to standard chromatographic cycling method. For oil and gas application, the system and method enable to achieve cycle times below 30 seconds when analyzing light alkanes. Of course, the gas analysis system and method described herein may be used to analyze other gaseous compounds, including alkanes with higher number of carbons or other types of gaseous compounds.

### BRIEF DESCRIPTION OF THE DRAWINGS

Various aspects of this disclosure may be better understood upon reading the following detailed description and upon reference to the drawings in which:
FIG. 1 is a schematic drawing of a well site installation including a system for analyzing drilling fluid exiting the wellbore, according to an embodiment of the disclosure,
FIG. 2 is a schematic drawing of a gas analysis system according to a prior art implementation
FIG. 3 is a schematic drawing of a gas analysis system according to an embodiment of the disclosure
FIG. 4 is a plot in time of the gas analysis method according to an embodiment of the disclosure
FIG. 5A & 5B show two configurations of the gas analysis system of FIG. 3
FIG. 6 shows a gas analysis system according to another embodiment of the disclosure.

### DETAILED DESCRIPTION

One or more specific embodiments of the present disclosure will be described below. These described embodiments are examples of the presently disclosed techniques. Additionally, in an effort to provide a concise description of these embodiments, some features of an actual implementation may not be described in the specification. It should be appreciated that in the development of any such actual implementation, as in any engineering or design project, numerous implementation-specific decisions may be made to achieve the developers' specific goals, such as compliance with system-related and business-related constraints, which may vary from one implementation to another. Moreover, it should be appreciated that such a development effort might be complex and time consuming, but would still be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. In all the following, the terms of "upstream" and "downstream" are understood relatively to the normal direction of circulation of a fluid in a conduit.

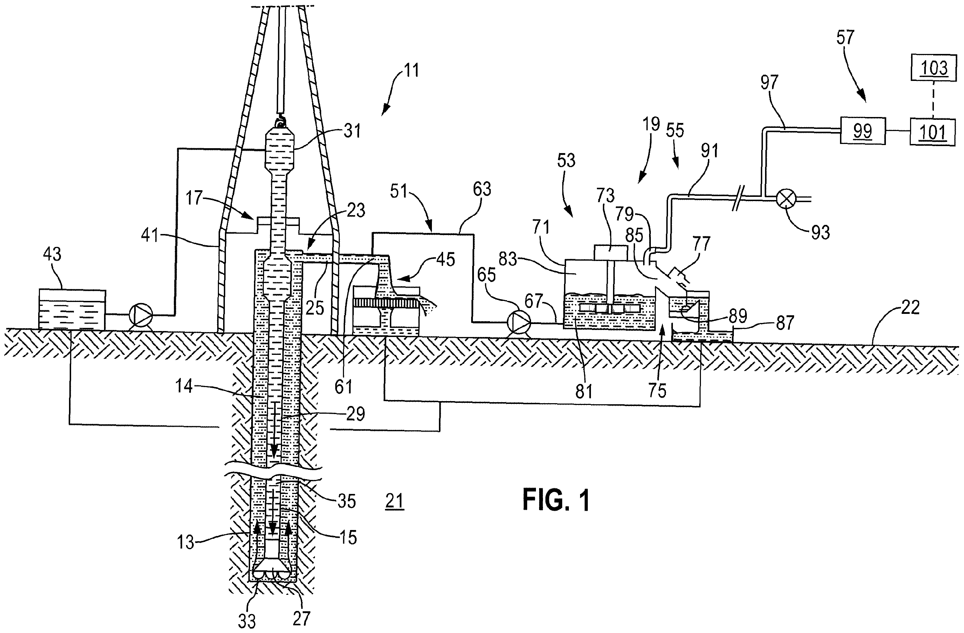

FIG. 1 is a schematic drawing of an installation according to an embodiment of the disclosure.

The installation is a drilling installation 11 of a well for producing fluid, notably hydrocarbons, such as an oil well. It comprises a drilling conduit 13 positioned in a cavity 14 pierced by a rotary drilling tool 15, a surface installation 17, and an assembly 19 for analyzing the gases contained in the drilling fluid.

The drilling conduit 13 is positioned in the cavity 14 pierced in the subsoil 21 by the rotary drilling tool 15. It extends in an upper portion of the height of the cavity 14 which it delimits. The cavity 14 further has a lower portion directly delimited by the subsoil. The drilling conduit 13 includes at the surface 22 a well head 23 provided with a conduit 25 for circulation of the drilling fluid. The drilling tool 15 comprises, from bottom to top in figure 1, a drilling head 27, a drill string 29, and a head 31 for injecting drilling fluid. The drilling tool 15 is driven into rotation by the surface installation 17.

The drilling head 27 comprises a tool 33 for piercing the rocks of the subsoil 21. It is mounted on the lower portion of the drill string 29 and is positioned at the bottom of the cavity 14. The drill string 29 comprises a set of hollow drilling tubes. These tubes delimit an inner space 35 which allows the drilling fluid injected through the head 31 from the surface 22 to be brought as far as the drilling head 27. For this purpose, the injection head 31 is screwed onto the upper portion of the drill string 29. This drilling fluid, commonly designated with the term of "drilling mud", is essentially liquid. The surface installation 17 comprises an apparatus 41 for supporting and driving into rotation the drilling tool 15, an apparatus 43 for injecting the drilling fluid and a vibrating sieve 45. The injection apparatus 43 is hydraulically connected to the injection head 31 for introducing and circulating the drilling fluid in the internal space 35 of the drill string 29.

The drilling fluid is introduced into the inner space 35 of the drill string 29 through the injection apparatus 43. This fluid flows downwards down to the drilling head 27 and passes into the drilling conduit 13 through the drilling head 27. This fluid cools and lubricates the piercing tool 33. The fluid collects the solid debris resulting from the drilling and flows upwards through the annular space defined between the drill string 29 and the walls of the drilling conduit 13, and is then discharged through the circulation conduit 25. The drilling fluid present in the cavity 14 maintains hydrostatic pressure in the cavity, which prevents breakage of the walls delimiting the cavity 14 not covered by the conduit 13 and which further avoids eruptive release of hydrocarbons in the cavity 14.

The circulation conduit 25 is hydraulically connected to the cavity 14, through the well head 23 in order to collect the drilling fluid from the cavity 14. It is for example formed by an open return line or by a closed tubular conduit. In the example illustrated in Fig. 1, the conduit 25 is a closed tubular conduit. The vibrating sieve 45 collects the fluid loaded with drilling residues which flow out of the circulation conduit 25, and separates the liquid from the solid drilling residues. The analysis assembly 19 comprises a device 51 for sampling the drilling fluid in the conduit 25, a device 53 for extracting a gas fraction of the compounds contained in the drilling fluid, a device 55 for transporting extracted gas fractions and an analysis device 57.

The sampling device 51 comprises a sampling head 61 immersed in the circulation conduit 25, a sampling conduit 63 connected upstream to the sampling head 61, a pump 65 connected downstream to the sampling conduit 63, and a supply conduit 67 for bringing the drilling fluid into the extraction device 53, connected to an outlet of the pump 65. The sampling device 51 is further advantageously provided with an assembly for heating the sampled fluid (not shown). This heating assembly is for example positioned between the pump 65 and the extraction device 53 on the supply conduit 67 and enables to heat the drilling fluid at a predetermined temperature at which the extraction of gas compounds from the drilling fluid is easier. The pump 65 is for example a peristaltic pump capable of conveying the drilling fluid sampled by the head 61 towards the extraction device 53 with a determined fluid volume flow rate Qₘ.

The extraction device 53 may comprise an enclosure 71 into which the supply conduit 67 opens out, a rotary stirrer 73 mounted in the enclosure 71, a mud discharge conduit 75, an inlet 77 for injecting a carrier gas and an outlet 79 for sampling the extracted gas fractions in the enclosure 71. The enclosure 71 has an inner volume for example comprised between 0.04 L and 3 L. It defines a lower portion 81 of average volume Vₘ, kept constant, in which circulates the drilling fluid stemming from the supply conduit 67 and an upper portion 83 of average volume V_{g} kept constant and defining a gas head space above the drilling fluid. The mud supply conduit 67 opens out into the lower portion 81. The stirrer 73 is immersed into the drilling fluid present in the lower portion 81. It is capable of vigorously stirring the drilling fluid in order to extract gases therefrom. The discharge conduit 75 extends between an overflow passage 85 made in the upper portion 83 of the enclosure 71 and a retention tank 87 intended to receive the drilling fluid discharged out of the extraction device 53. The discharge conduit 75 is advantageously bent in order to form a siphon 89 opening out facing the retention tank 87 above the level of liquid contained in this tank 87. Alternatively, the drilling fluid from the conduit 75 is discharged into the circulation conduit 25.

In this example, the inlet for injecting a carrier gas 77 opens out into the discharge conduit 75 upstream from the siphon 89 in the vicinity of the overflow passage 85. Alternatively, the inlet 77 opens out into the upper portion 83 of the enclosure 71. The sampling outlet 79 opens out into an upper wall delimiting the upper portion 83 of the enclosure 71. The drilling fluid introduced into the enclosure 71 via the supply conduit 67 is discharged by overflow into the discharge conduit 75 through the overflow passage 85. A portion of the discharged fluid temporarily lies in the siphon 89 which prevents gases from entering the upper portion 83 of the enclosure 71 through the discharge conduit 75. The introduction of gas into the enclosure 71 is therefore exclusively carried out through the inlet for injecting a carrier gas 77. In the example illustrated by figure 1, the carrier gas introduced through the introduction inlet 77 is formed by the surrounding air around the installation, at atmospheric pressure. Alternatively, this carrier gas is another gas such as nitrogen or helium.

In this example, an example of an extractor has been disclosed in details. However, any extractor enabling to extract gas from the drilling fluid could be used in relationship with the analysis device 57.

The transport device 55 comprises a line 91 for transporting the extracted gases towards the analysis device 57 and an apparatus 93 providing suction for conveying the gases extracted out of the enclosure 71 through the transport line 91. The transport line 91 extends between the sampling outlet 79 and the analysis device 57. It advantageously has a length comprised between 2 m and 500 m, in order to move the analysis device 57 away from the well head 23 into a non-explosive area. The transport line 91 can be in any suitable material used for tubing realization and is advantageously made on the basis of a metal or polymer material, notably polyethylene and/or polytetrafluoroethylene (PTFE).

The analysis device 57 comprises a sampling conduit 97 tapped on the transport line 91 upstream from the apparatus 93 providing suction, a gas chromatographic system 99 for separating the different compounds contained in the gas sample before the sample is analyzed, and an analyzing instrumentation 101. The instrumentation 101 is capable of detecting and quantifying the gas fractions extracted out of the drilling fluid in the enclosure 71 which have been transported through the transport line 91 and separated in the gas chromatographic system. This instrumentation for example comprises one or more of an infrared detection apparatuses for the amount of carbon dioxide, flame ionization detectors (FID) for detecting hydrocarbons, thermal conductivity detectors (TCD) or a mass spectrometer to be used as a universal detector, depending on the gases to be analyzed. Online simultaneous detection and quantification of a plurality of compounds contained in the fluid, without any manual sampling by an operator, is therefore possible within time intervals of less than 1 minute.

The analysis system also includes a computing unit 103 capable of calculating the content of a plurality of compounds to be analyzed present in the drilling fluid, on the basis of the value of the extracted gas fractions in the enclosure 71, as determined by the instrumentation 101. The drilling fluid for example is formed by a water-based mud, an oil-based mud or a synthetic-based mud. The compounds to be analyzed contained in the drilling fluid are notably aliphatic or aromatic C₁-C₁₀ hydrocarbons. The computing unit 103 is situated at the well site and/or remotely and comprises one or more processors for executing the calculation in combination with memory such as hard drive.

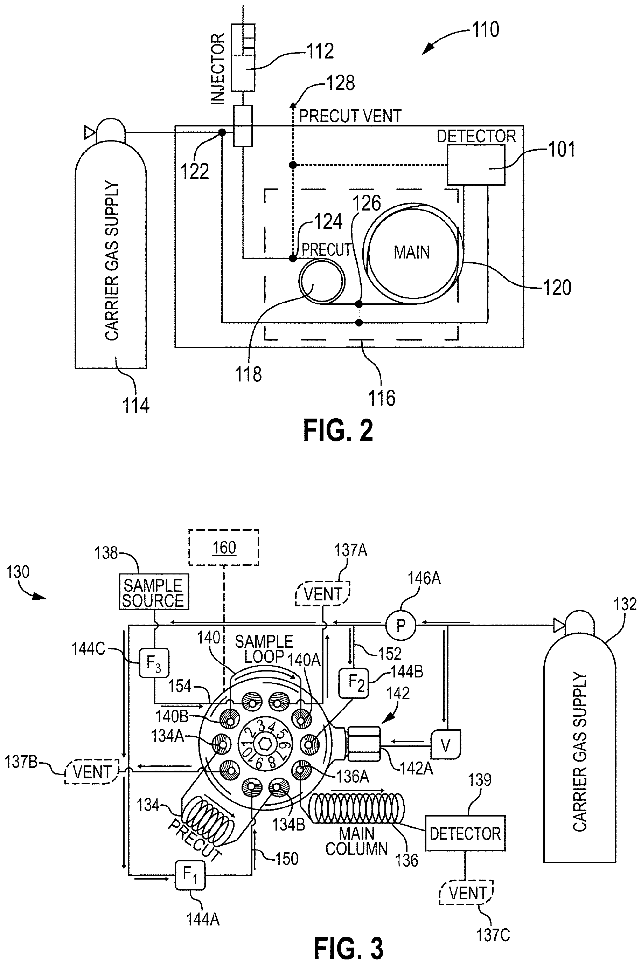

A gas chromatographic system 99 will now be described in more details in relation with FIG. 2

FIG. 2 shows an example of a standard gas chromatographic system 110. In the standard system 110, a specific volume of sample gas is picked (by a sampler/injector 112) and pushed through the analyzer by a carrier gas provided by a carrier gas supply 114. The sample is passing through a separation apparatus 116 to reach the detector. Depending of the application and type of analyzer, separation process may be realized with one chromatographic column (like in most laboratory devices) or combination of precut 118 and main columns 120 as represented in FIG. 2. The precut column 118 is used for a preliminary chromatographic separation (before main column) with a purpose of separating gas species of interest from gas species of non-interest such as pollutants. As soon as all gas species of interest (or compounds of interest) leave precut column to enter main column, carrier gas is split, and while reversed flow of carrier gas is being applied to the precut, called also backflush allowing to waste components of non interest, other part of carrier gas flow push the components of interest in the main column so that they can be properly separated . The flow of carrier gas is managed by valves 122, 124, 126. First the carrier gas is supplied to precut column so that the flow directs the gas sample through the precut column to the main column 120 and when species of interest have been separated in the precut column from the components of non-interest, reversed flow of carrier gas lead the components that are still in the precut to vent 128 through valve 126. During this period which correspond to the cleaning of the precut column 118 (or backflush), separation of components of interest continues in the main column. The separated compounds are afterwards directed to the detection instrumentation 101.

In most applications the precut column length is significantly shorter than main column length and time needed for a backflush shorter than time needed for a proper separation of gas species in the main column. Nevertheless, precut is being backflushed until all compounds of interest have exited the main column.

The gas chromatographic system according to an embodiment of the disclosure will now be disclosed in relationship with FIG. 3.

The analysis system 130 according to an embodiment of the disclosure comprises as disclosed in relationship with FIG. 2 a carrier gas supply 132 for providing carrier gas to the gas chromatograph, a precut column 134 and a main column 136, vents 137A-B-C as well as a detector 139, which can be a Flame Ionization Detector (FID) but also Thermal Conductivity Detector (TCD) or a mass spectrometer or any other detector enabling to detect gas content. The carrier gas may be air as well as any other appropriate inert gas that does not react with the hydrocarbons, for instance Nitrogen N2 or Helium. The precut and main column may be packed or capillary columns or MEMS columns arranged in a Micro Electro-Mechanical System.

The system 130 also comprises a sample source 138 which typically will be connected to the transport line 91 and a sample loop 140 that will allow the injection of a sample of known volume into the chromatographic (precut and main) columns. The sample loop may be, for instance, a tube of calibrated length and diameter. It also comprises a fluidic management system including a multi-port valve 142 connected to the different elements of the system 130, in particular to the inlet 134A and outlet 134B of precut column 134, inlet 136A of the main column 136, inlet 140A and outlet 140B of the sample loop 140, to the sample source 138 and to the carrier gas supply 132 as well as vents 137A-B. The fluidic management system also comprises flow regulators 144A-C, that can be mass flow controllers, volume flow controllers or flow sensors in combination with proportional valves, as well as a pressure regulator 146A.

The fluidic management system comprises several lines, in particular:
- A first line 150 for fluidly connecting the carrier gas supply to the outlet of the precut column and comprising the first flow regulator 144A
- A second line 152 for fluidly connecting the carrier gas supply to the inlet of the main column and comprising the second flow regulator 144B
- A third line 154 for fluidly connecting the sample source to the sample loop, and comprising the third flow regulator 144C
- A fourth line for fluidly connecting the carrier gas supply to the sample loop, the fourth line being in this embodiment common with the first line, except for the configuration of the valve,

The multi-port valve 142 is disposed in each of the first, second and third and fourth lines and enables and disables the fluid connection between each of the lines.

The multi-port valve 142 is configured to take two configurations: in a first configuration, a given port (for instance, port 5) of the valve is in fluid communication with a first of its neighbouring ports (for instance port 6) while there is a seal between the given port and its other neighbouring port (i.e. port 4) preventing fluid communication. In the second configuration, the given port is in fluid communication with its other neighbouring port while fluid communication with the first neighbouring port is prevented. Any appropriate valve may be chosen such as a 2-position diagram valve or a micro-fluidic solution for MEMS system. The multi-port valves could also be replaced by two multi-ports valves (for instance 6-ports) in series or in parallel. In an embodiment, the valve may be equipped with an air inlet 142A allowing for actuation of the valve via a flow coming from the carrier gas supply and triggering the change from one configuration to another.

The valve is controlled by a control module 160 that is able to send signals to the valve (and optionally receive signals from the valve) in real-time, to control its configuration and manage the fluid connections in the gas analysis system. The control module may also be able to command the flow regulators and the pressure regulators if any. The control module includes one or more logic controller, processors, FPGA, etc. and might be controlled via an user interface and/or automatically depending on environmental parameters.

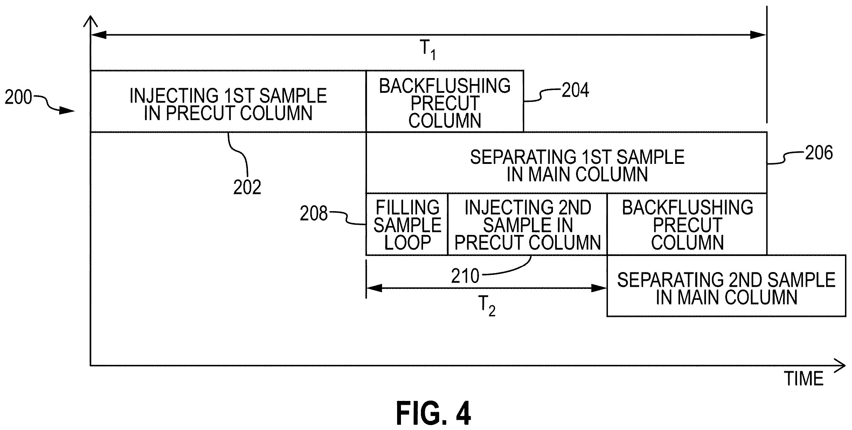

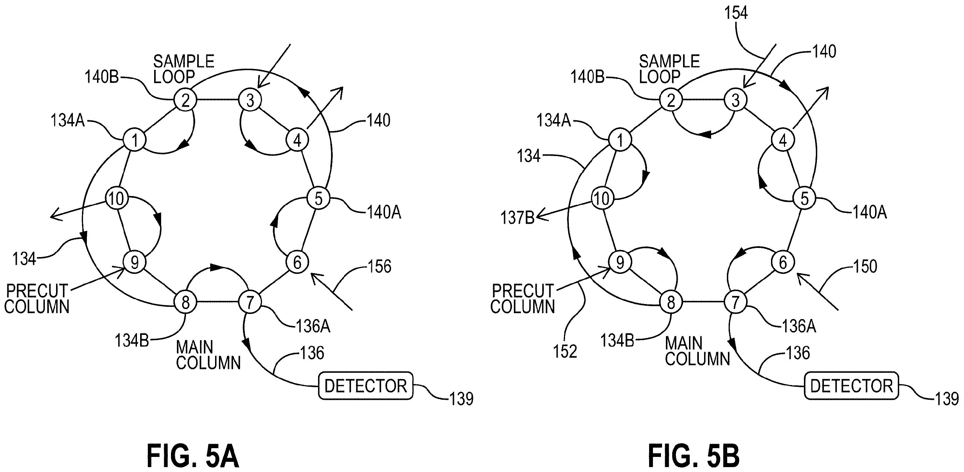

The method 200 for operating the gas chromatographic system will now be disclosed in more details in relation with FIG. 4 and 5A & 5B respectively representing the first and second configurations of the multi-port valve 142.

The method includes injecting a first sample of gas in the precut column (block 202), i.e. connecting the sample loop to the precut column. Known volume of gas formed in the sample loop is being injected into precut column during designated period of time. During the injection preliminary separation of components present in the first sample takes place. During this operation, the multi-port valve is in the first configuration and the outlet 140B of the sample loop is connected to the inlet 134A of the precut column while the outlet 134B of the precut column is connected to the inlet 136A of the main column 136. The inlet 140A of the sample loop is connected to the gas carrier supply via the fourth line. The multi-port valve disables fluid connection in the first, second and third lines.

When the designated period of time is over, this period being set so that all components of interest reach the main column, precut column 134 is backflushed i.e. cleaned (block 204). At this time carrier gas flow direction in precut column is reversed. Valve 142 is in second configuration and the outlet 134B of the precut column is in fluid communication with the carrier gas supply 132 via second line 152 while the outlet of the precut column is in fluid communication with a vent 137B. In the second configuration of the valve, the inlet 136A of the main column is directly in fluid communication with the carrier gas supply 132 via the first line 150 enabling the direction of flow in main column to stay unchanged and separation in the main column (block 206) to take place while backflushing. As the flow regulation in the precut column and flow regulation in main column are independent - set respectively by flow regulators 144A and 144B, both columns being in fluid communication with the gas supply 132 via different ports, it is possible, in order to reduce backflush time, to increase flowrate in the precut column 134 with a flow regulator 144A configured to set a higher flowrate than the second flow regulator. Precut column 134 is being cleaned during a specific cleaning period enabling all of the pollutants to leave the precut column via the vent 137.

Simultaneously with backflushing the precut column, a second sample is formed in the sample loop 140 (block 208). Indeed in the second configuration of the valve, the inlet 140A of the sample loop is in fluid communication with the sample source 138 (here the outlet 140B) via the third line, the connection between inlet of the sample source and carrier gas supply via fourth line being disabled by the valve 142.

Once the sample is formed and backflushing is over, the valve takes the first configuration once more and the second sample is injected in the precut column (block 210) as described above.

Therefore, combining these two configurations, it is possible to backflush the precut column and filling the sample loop simultaneously with a second sample while the compounds of interest in the first sample are being separated in the main column. Then, after sample looped is filled, it is possible to inject the second sample in the precut column while the compounds of interest in the first sample are still being separated in the main column. The independent fluid management of the main column and precut column enables such setup. In this case, it is possible to have an overlap between the processing of the first sample by the gas chromatographic system and the processing of the second sample, therefore reducing the cycle time T2 between two cycles and two measurements without reducing the total processing time T1 of one sample. In particular, it is possible to cut by half the cycle time between two measurements. As an example, in the context of measuring light alkanes, the separation may be performed with a cycle time of less than 30 seconds instead of less than 1 minutes with a standard gas chromatographic system architecture. Of course, this setup could also be used for analyzing additional compounds or alternative compounds reducing the cycle time.

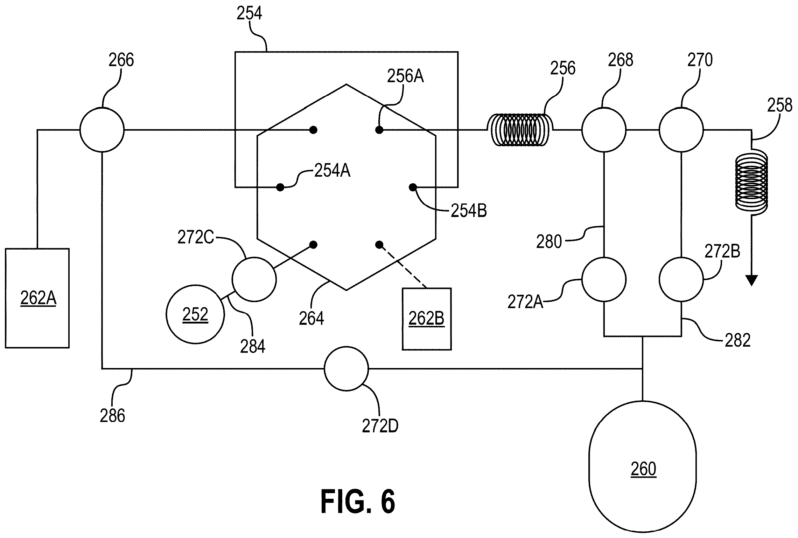

FIG. 6 shows an alternative architecture for the gas analysis system 250.

The system 250 comprises as previously mentioned a gas source 252, a sample loop 254, a precut column 256 and a main column 258 as well as a carrier gas supply 260. It also comprises two vents 262A-B. The system also includes a fluidic management system including a 6-port valve 264 and three 3-port valves 262, 268 and 270. The 6-port valve comprises six ports, each linked respectively to the gas source 252, the vent 262B, the inlet 254A and outlet 254B of the sample loop, the inlet 256A of the precut column and to one of the 3-ports valve 266.

The first 3-port valve 266 is fluidly connected to the 6-port valve, the carrier gas supply 260 and a vent 262A. The second 3-port valve is connected to the outlet of the precut column 256, the carrier gas supply 260 and the third 3-port valve 270. The third 3-port valve 270 is connected with the second 3-port valve 268, the inlet of the main column 258 and the carrier gas supply 260.

The fluidic management system also includes flow regulators 272 between carrier gas supply and each of the first second and third valves 266-270 and between the gas source and the 6 port valve. It may also include pressure regulators, not represented here.

As described above, the fluidic management includes:
- A first line 280 for fluidly connecting the carrier gas supply to the outlet of the precut column that comprising a first flow regulator 272A
- A second line 282 for fluidly connecting the carrier gas supply to the inlet of the main column and comprises a second flow regulator 272B
- A third line 284 for fluidly connecting the sample source to the sample loop, and comprising a third flow regulator 272C
- A fourth line 286 for fluidly connecting the carrier gas supply to the sample loop, comprising a fourth flow regulator 272D,

In each of the line, is disposed at least one valve, for instance, in the first line, the valve 268, in the second line the valve 270, in the third line the 6-port valve 264 and in the fourth line the valves 266 and the 6-port valve 264. These valves enable or disable the fluid connection on the line

Each of the valve can take different configurations in order to connect two different ports in different configurations. The 6-port valve can take two configurations: in a first configuration, a given port of the valve is in fluid communication with a first of its neighbouring ports while there is a seal between the given port and a second of its neighbouring ports (ie port 4) preventing fluid communication. In the second configuration, the given port is in fluid communication with the second neighbouring port while fluid communication with the first neighbouring port is prevented.

The valves are controlled by a control module, not represented here, but able to send signals to the valves (and optionally receive signals from the valves) in real-time, to control their position or configuration and manage the fluid connections in the gas analysis system. The control module may also be able to command the flow regulators and the pressure regulators if any.

The operation of the gas analysis system of FIG. 6 will now be described. The method includes injecting a first sample of gas in the precut column (block 202). Known volume of gas formed in the sample loop is being injected into precut column during designated period of time. During the injection preliminary separation of components present in the first sample takes place. During this operation, the 6-port valve is in the first configuration and the outlet 254B of the sample loop is connected to the inlet 256A of the precut column while the inlet 254A of the sample loop is connected to the valve 266. The valve 266 is also simultaneously controlled so that the gas carrier supply is in fluid communication with the sample loop, therefore enabling formation of a flow through the sample loop and the precut column via the fourth line 286. During this first operation, the valve 268 fluidly connects the precut column to the valve 270 and the valve 270 fluidly connects the valve 268 to the main column so that the flow separated in the precut column is directed to the main column.

When the designated period of time is over, this period being set so that all compounds of interest reach the main column, precut column 256 is backflushed i.e cleaned (block 204). At this time carrier gas flow direction in precut column is reversed. The valve 268 is controlled so that the gas supply 260 is in fluid communication with the outlet of the precut column via first line 280 and the 6-port valve 264 is in second configuration so that the inlet 256A of the precut column is in fluid communication with the valve 266. The valve 266 is also controlled so that the 6-port valve 264 is in fluid communication with the vent 262A, directing the backflushed fluid to the vent. In this second configuration of the 6-port valve, the inlet 254A of the sample loop is in fluid communication with the gas source 252 via third line 284 while the outlet of the sample loop 254B is in fluid communication with the vent 262B, enabling the formation of a second sample in the sample loop while the precut column is backflushed from the pollutants of the first sample. Simultaneously, valve 270 is controlled so that the main column inlet 258A is in fluid communication with the carrier gas supply 260 via second line 282 enabling the direction of flow in main column to stay unchanged and separation in the main column (block 206) to take place while backflushing.

Therefore, in this architecture as well, simultaneously with backflushing the precut column, a second sample is formed in the sample loop 254 which enables to reduce the cycle time of the gas chromatography apparatus. The configuration presented in FIG. 6 is another example of configuration where it is possible to backflush the precut column and filling the sample loop with a second sample while the compounds of interest in the first sample are being separated in the main column, and, after sample looped is filled, it is possible to inject the second sample in the precut column while the compounds of interest in the first sample are still being separated in the main column.

The disclosure generally relates to relates to a gas analysis system having a sample loop for forming a gas sample, a precut column for separating compounds of interest from compounds of no interest, having an inlet fluidly connected to the sample loop, and a main column for separating each compound of interest, having an inlet fluidly connected to an outlet of the precut column. The gas analysis system also comprises a fluidic management system including a carrier gas supply and valves. The carrier gas is able to flow in the precut column in both directions, and the fluidic management includes a first line fluidly connecting the carrier gas supply to the outlet of the precut column and a second line connecting the carrier gas supply to the inlet of the main column. The valves are disposed in the first and second lines and enable or disable the fluid connection between the carrier gas supply and the inlet of the main column and the carrier gas supply and the outlet of the precut column.

In an embodiment, the gas analysis system includes a control module for controlling the at least one valve.

In an embodiment, the at least one valve is a multi-port valve. The carrier gas supply may be connected to a first port of the valve via the first line, the outlet of the precut column may be connected to a second port of the valve, the carrier gas supply may be connected to a third port of the valve via the second line and the inlet of the main column may be connected to a fourth port of the valve.

In an embodiment, at least one of the first and second lines includes a flow regulator for regulating the flow of carrier gas. In a particular embodiment, the first line includes a first flow regulator and the second line includes a second flow regulator. The first flow regulator may be configured to form a flow having a higher flow rate than the flow formed by the second flow regulator.

In an embodiment, the system also comprises a gas source connectable to the sample loop via a third line. The third line may comprise a third flow regulator.

In an embodiment, the system includes a fourth line connecting the sample loop to the carrier gas supply

In an embodiment, the system comprises a gas detector connected to an outlet of the main column. The gas detector may be a mass spectrometer, a flame ionization detector (FID) , a thermal conductivity detector (TCD) or a infrared (IR) detector.

In an embodiment, the system comprises at least a vent fluidly connectable to the inlet of the precut column.

In an embodiment, the fluidic management system is configured to take a first configuration in which the carrier gas supply is fluidly connected to the outlet of the precut column via the first line and the carrier gas supply is fluidly connected to the main column via the second line. It may also take a second configuration in which the gas carrier supply is fluidly connected to the sample loop, the inlet of the precut column is fluidly connected to the sample loop, the outlet of the precut column is fluidly connected to the inlet of the main column. In a particular embodiment, the system has a multi-port valve configured to take a first configuration and a second configuration. The first configuration of the gas analysis system may be obtained when the valve is in the first configuration and the second configuration of the gas analysis system may be obtained when the valve is in the second configuration

In the above-mentioned embodiment, when the system comprises a gas source connectable to the sample loop via a third line, the third line may comprise a third flow regulator the gas source may be fluidly connected to the sample loop in the first configuration of the fluidic management system and disconnected from the sample loop in the second configuration of the fluidic management system.

Similarly, when the system includes a fourth line connecting the sample loop to the carrier gas supply, the carrier gas supply may be fluidly connected with the sample loop in the second configuration and disconnected from the sample loop in the first configuration.

In an embodiment, the compounds of interest may be hydrocarbon, in particular alkanes. The compounds of no interest may be pollutants.

The disclosure also relates to a drilling installation including a sampling device for sampling a drilling fluid exiting a wellbore, an extraction device for extraction at least a gas compound from the drilling fluid and a gas analysis system as disclosed above.

The disclosure also relates to a method for operating the gas analysis system as disclosed above. The method comprises injecting a first sample in the sample loop, connecting the sample loop to the precut column and separating the first sample in the precut column to separate the compounds of interest from other compounds of no interest, and then backflushing the precut column so that the compounds of no interest of the first sample are evacuated, and simultaneously separating the compounds of interests of the first sample in the main column. The method also comprises fill the sample loop with a second sample while the precut column is being backflushed, and separating the second sample in the precut column while the compounds of interest of the first sample are separated in the main column.

The method may comprise backflushing the compounds of no interest of first, respectively second, sample from the precut column while separating the compounds of interest of the first, respectively second, sample in the main column.

In an embodiment, the method may comprises configuring the fluidic management system in a first configuration to inject the first sample in the sample loop and backflush the precut column, and configuring the fluidic management system in the second configuration to connect the sample loop to the precut column.

In an embodiment, backflushing the precut column is performed so that the backflush is shorter than the separation in the main column.

In an embodiment, the compounds of interest are alkanes and the cycle time between two backflush operations is less than 30 seconds

## Claims

1. A gas analysis system having:
- A sample loop (140) for forming a gas sample,
- A precut column (134) for separating compounds of interest from compounds of no interest, such, having an inlet (134A) fluidly connected to the sample loop (140)
- A main column (136) for separating each compound of interest, having an inlet fluidly connected to an outlet (134B) of the precut column (134)
- A fluidic management system including a carrier gas supply (132) and at least a valve (142), wherein the fluidic management system is configured so that the carrier gas is able to flow in the precut column (134) in both directions,
wherein the fluidic management system includes a first line fluidly (150) connecting the carrier gas supply (132) to the outlet (134B) of the precut column (134) and a second line (152) connecting the carrier gas supply (132) to the inlet (136A) of the main column (136),
wherein the at least one valve (142) is configured to be disposed in the first and second lines (150, 152) so as to enable or disable the fluid connection between the carrier gas supply (132) and the inlet (136A) of the main column (136) and the carrier gas supply (132) and the outlet (134A) of the precut column (134)
**characterised in that**
the first line (150) includes a first flow regulator (144A) and the second line (152) includes a second flow regulator (144B), the first and second flow regulators configured to regulate the flow of carrier gas and the first flow regulator (144a) configured to form a flow having a higher flow rate than the flow formed by the second flow regulator (144).

2. The gas analysis system according to claim 1, including a control module (160) for controlling the at least one valve (142).

3. The gas analysis system according to any preceding claim, wherein the at least one valve (142) is a multi-port valve, wherein the carrier gas supply (132) is connected to a first port of the valve (142) via the first line (150), the outlet (134B) of the precut column (134) is connected to a second port of the valve (142) , the carrier gas supply (132) is connected to a third port of the valve (142) via the second line (152) and the inlet (134A) of the main column (134) is connected to a fourth port of the valve (142) .

4. The gas analysis system according to any preceding claim, also comprising a gas source (138, 252) connectable to the sample loop (140) via a third line (154).

5. The gas analysis system of any preceding claim, comprising a gas detector (139) connected to an outlet (136B) of the main column (136).

6. The gas analysis system according to any preceding claim, wherein the fluidic management system is configured to take a first configuration in which:
- The carrier gas supply (132) is fluidly connected to the outlet (134B) of the precut column (134) via the first line (150),
- The carrier gas supply (132) is fluidly connected to the main column (136) via the second line (152),
And a second configuration in which:
- The carrier gas supply (132) is fluidly connected to the sample loop (140),
- The inlet (134A) of the precut column (134) is fluidly connected to the sample loop (140),
- The outlet (134B) of the precut column (134) is fluidly connected to the inlet (136A) of the main column (136).

7. The gas analysis system of according to the preceding claim, having a multi-port valve (264) configured to take a first configuration and a second configuration, wherein the first configuration of the gas analysis system is obtained when the valve (142) is in the first configuration and the second configuration of the gas analysis system is obtained when the valve (142) is in the second configuration.

8. The gas analysis system of any preceding claim, wherein the compounds of interest are alkanes.

9. A drilling installation including:
- A sampling device (51) for sampling a drilling fluid exiting a wellbore,
- An extraction device (53) for extraction at least a gas compound from the drilling fluid
- A gas analysis system (130) according to any preceding claim.

10. A method (200) for operating a gas analysis system (130) according to claim 1, the method comprising:
- Injecting (202) a first sample in the sample loop (140),
- Connecting the sample loop (140) to the precut column (134) and separating the first sample in the precut column (134) to separate the compounds of interest from other compounds of no interest,
- Backflushing (204) the precut column (134) so that the compounds of no interest of the first sample are evacuated, and simultaneously separating (206) the compounds of interests of the first sample in the main column (136), wherein backflushing the precut column (134) is regulated so that the backflush is shorter than the separation in the main column (136),
- Wherein the method also comprises:
- While the precut column (134) is being backflushed (204), filling (208) the sample loop (140) with a second sample,
- While the compounds of interest of the first sample are separated (206) in the main column (136), separating (210) the second sample in the precut column (134) .

11. The method of claim 10, comprising backflushing (204) the compounds of no interest of first, respectively second, sample from the precut column (134) while separating (210) the compounds of interest of the first, respectively second, sample in the main column (136).

12. The method of claim 10 or 11, wherein the gas analysis system is according to claim 7, the method comprising s configuring the fluidic management system in a first configuration to inject the first sample in the sample loop (140) and backflush the precut column (134), and configuring the fluidic management system in the second configuration to connect the sample loop (140) to the precut column (136).

## Patentansprüche

1. Ein Gasanalysesystem, umfassend:
- eine Probenschleife (140) zur Bildung einer Gasprobe,
- eine vorgeschnittene Säule (134), um Verbindungen von Interesse von Verbindungen, die nicht von Interesse sind, zu trennen, wobei die Säule einen Einlass (134A) aufweist, der in Fluidverbindung mit der Probenschleife (140) steht
- eine Hauptsäule (136) zum Trennen jeder Verbindung von Interesse, wobei die Hauptsäule einen Einlass, der in Fluidverbindung mit einem Auslass (134B) der vorgeschnittenen Säule (134) steht, aufweist
- Ein Fluidmanagementsystem, das eine Trägergasversorgung (132) und mindestens ein Ventil (142) einschließt, wobei das Fluidmanagementsystem so konfiguriert ist, dass das Trägergas in der vorgeschnittenen Säule (134) in beide Richtungen fließen kann,
wobei das Fluidmanagementsystem
eine erste Leitung (150), die eine Fluidverbindung von der Trägergasversorgung (132) zum Auslass (134B) der vorgeschnittenen Säule (134) herstellt, und eine zweite Leitung (152) einschließt, die die Trägergasversorgung (132) mit dem Einlass (136A) der Hauptsäule (136) verbindet,
wobei das mindestens eine Ventil (142) so konfiguriert ist, dass es in der ersten und zweiten Leitung (150, 152) angeordnet ist. um die Fluidverbindung zwischen der Trägergasversorgung (132) und dem Einlass (136A) der Hauptsäule (136) und der Trägergasversorgung (132) und dem Auslass (134A) der vorgeschnittenen Säule (134) zu aktivieren oder zu deaktivieren,
**dadurch gekennzeichnet, dass**
die erste Leitung (150) einen ersten Durchflussregler (144A) und die zweite Leitung (152) einen zweiten Durchflussregler (144B) einschließt, wobei der erste und zweite Durchflussregler zur Regelung des Trägergasflusses konfiguriert ist, und der erste Durchflussregler (144a) so konfiguriert ist, dass er einen Durchfluss mit einer höheren Durchflussmenge als der vom zweiten Durchflussregler (144) gebildete Durchfluss bildet.

2. Das Gasanalysesystem nach Anspruch 1, einschließlich eines Steuermoduls (160) zur Steuerung des mindestens einen Ventils (142).

3. Das Gasanalysesystem nach einem der vorangehenden Ansprüche, wobei das mindestens eine Ventil (142) ein Ventil mit mehreren Öffnungen ist, wobei die Trägergasversorgung (132) über die erste Leitung (150) mit einer ersten Öffnung des Ventils (142) verbunden ist, der Auslass (134B) der vorgeschnittenen Säule (134) mit einer zweiten Öffnung des Ventils (142) verbunden ist, die Trägergasversorgung (132) über die zweite Leitung (152) mit einer dritten Öffnung des Ventils (142) verbunden ist, und der Einlass (134A) der Hauptsäule (134) mit einer vierten Öffnung des Ventils (142) verbunden ist.

4. Das Gasanalysesystem nach einem der vorangehenden Ansprüche, das ebenfalls eine Gasquelle (138, 252) umfasst, die über eine dritte Leitung (154) mit der Probenschleife (140) verbunden werden kann.

5. Das Gasanalysesystem nach einem der vorangehenden Ansprüche, umfassend einen Gasdetektor (139), der mit einem Auslass (136B) der Hauptsäule (136) verbunden ist.

6. Das Gasanalysesystem nach einem der vorangehenden Ansprüche, wobei das Fluidmanagementsystem so konfiguriert ist, dass es eine erste Konfiguration einnimmt, in der:
- die Trägergasversorgung (132) über die erste Leitung (150) in Fluidverbindung mit dem Auslass (134B) der vorgeschnittenen Säule (134) steht,
- die Trägergasversorgung (132) über die zweite Leitung (152) in Fluidverbindung mit der Hauptsäule (136) steht,
und eine zweite Konfiguration, in der:
- die Trägergasversorgung (132) in Fluidverbindung mit der Probenschleife (140) steht,
- der Einlass (134A) der vorgeschnittenen Säule (134) in Fluidverbindung mit der Probenschleife (140) steht,
- der Auslass (134B) der vorgeschnittenen Säule (134) in Fluidverbindung mit dem Einlass (136A) der Hauptsäule (136) steht.

7. Das Gasanalysesystem nach dem vorhergehenden Anspruch, umfassend ein Ventil mit mehreren Öffnungen (264), das dazu konfiguriert ist, eine erste Konfiguration und eine zweite Konfiguration einzunehmen, wobei sich die erste Konfiguration des Gasanalysesystems ergibt, wenn sich das Ventil (142) in der ersten Konfiguration befindet und sich die zweite Konfiguration des Gasanalysesystems ergibt, wenn sich das Ventil (142) in der zweiten Konfiguration befindet.

8. Das Gasanalysesystem nach einem der vorangehenden Ansprüche, wobei die Verbindungen von Interesse Alkane sind.

9. Eine Bohranlage, die Folgendes einschließt:
- eine Vorrichtung zur Probenahme (51) zum Abnehmen von Proben einer aus einem Bohrloch austretenden Bohrflüssigkeit,
- eine Absaugvorrichtung (53) zum Entnehmen von mindestens einer Gasverbindung aus der Bohrflüssigkeit.
- das Gasanalysesystem (130) nach einem der vorangehenden Ansprüche.

10. Ein Verfahren (200) zum Betreiben eines Gasanalysesystems (130) nach Anspruch 1, wobei das Verfahren Folgendes umfasst:
- Injizieren (202) einer ersten Probe in die Probenschleife (140),
- Verbinden der Probenschleife (140) mit der vorgeschnittenen Säule (134) und Trennen der ersten Probe in der vorgeschnittenen Säule (134), um die Verbindungen von Interesse von anderen Verbindungen zu trennen, die nicht von Interesse sind,
- Rückspülen (204) der vorgeschnittenen Säule (134) um so die Verbindungen aus der ersten Probe, die nicht von Interesse sind, zu entfernen, und um gleichzeitig die Verbindungen von Interesse aus der ersten Probe in der Hauptsäule (136) zu trennen (206), wobei das Rückspülen der vorgeschnittenen Säule (134) so gesteuert wird, dass die Rückspülung kürzer als die Trennung in der Hauptsäule (136) ist,
- Wobei das Verfahren ferner umfasst:
- während des Rückspülens (204) der vorgeschnittenen Säule (134), Füllen (208) der Probenschleife (140) mit einer zweiten Probe,
- während des Trennens (206) der Verbindungen von Interesse aus der ersten Probe in der Hauptsäule (136), Trennen (210) der zweiten Probe in der vorgeschnittenen Säule (134).

11. Das Verfahren nach Anspruch 10, umfassend das Rückspülen (204) der Verbindungen aus der ersten bzw. zweiten Probe, die nicht von Interesse sind, aus der vorgeschnittenen Säule (134), während die Verbindungen von Interesse aus der ersten bzw. zweiten Probe in der Hauptsäule (136) getrennt (210) werden.

12. Das Verfahren nach Anspruch 10 oder 11, wobei das Gasanalysesystem nach Anspruch 7 angeordnet ist, wobei das Verfahren das Konfigurieren des Fluidmanagementsystems in einer ersten Konfiguration, um die erste Probe in die Probenschleife (140) zu injizieren und die vorgeschnittene Säule (134) rückzuspülen, und das Konfigurieren des Fluidmanagementsystems in der zweite Konfiguration umfasst, um die Probenschleife (140) mit der vorgeschnittenen Säule (136) zu verbinden.

## Revendications

1. Système d'analyse de gaz présentant :
- une boucle d'échantillonnage (140) destinée à former un échantillon de gaz,
- une colonne de rectification (134) destinée à séparer les composés dignes d'intérêt des composés sans intérêt, présentant une entrée (134A) en communication fluidique avec la boucle d'échantillonnage (140)
- une colonne principale (136) destinée à séparer chaque composé digne d'intérêt, présentant une entrée en communication fluidique avec une sortie (134B) de la colonne de rectification (134)
- un système de gestion des fluides comportant une alimentation en gaz vecteur (132) et au moins une vanne (142), dans lequel le système de gestion des fluides est conçu de sorte que le gaz vecteur peut circuler dans la colonne de rectification (134) dans les deux sens,
dans lequel le système de gestion des fluides comporte une première conduite en communication fluidique (150) de l'alimentation en gaz vecteur (132) à la sortie (134B) de la colonne de rectification (134) et une deuxième conduite (152) raccordant l'alimentation en gaz vecteur (132) à l'entrée (136A) de la colonne principale (136),
dans lequel ladite au moins une vanne (142) est conçue pour être disposée dans les première et deuxième conduites (150, 152) de manière à activer ou désactiver la communication fluidique entre l'alimentation en gaz vecteur (132) et l'entrée (136A) de la colonne principale (136) et l'alimentation en gaz vecteur (132) et la sortie (134A) de la colonne de rectification (134).
**caractérisé en ce que**
la première conduite (150) comporte un premier régulateur d'écoulement (144A) et la deuxième conduite (152) comporte un second régulateur d'écoulement (144B), les premier et second régulateurs d'écoulement étant conçus pour réguler l'écoulement du gaz vecteur et le premier régulateur d'écoulement (144a) étant conçu pour former un écoulement présentant un débit plus élevé que l'écoulement formé par le second régulateur d'écoulement (144).

2. Système d'analyse de gaz selon la revendication 1, comportant un module de commande (160) destiné à commander au moins ladite au moins une vanne (142).

3. Système d'analyse de gaz selon une quelconque revendication précédente, dans lequel ladite au moins une vanne (142) est une vanne à orifices multiples, dans lequel l'alimentation en gaz vecteur (132) est raccordée à un premier orifice de la vanne (142) par l'intermédiaire de la première conduite (150), la sortie (134B) de la colonne de rectification (134) est raccordée à un deuxième orifice de la vanne (142), l'alimentation en gaz vecteur (132) est raccordée à un troisième orifice de la vanne (142) par l'intermédiaire de la deuxième conduite (152) et l'entrée (134A) de la colonne principale (134) est raccordée à un quatrième orifice de la vanne (142).

4. Système d'analyse de gaz selon une quelconque revendication précédente, comprenant également une source de gaz (138, 252) raccordable à la boucle d'échantillonnage (140) par l'intermédiaire d'une troisième conduite (154).

5. Système d'analyse de gaz selon une quelconque revendication précédente, comprenant un détecteur de gaz (139) raccordé à une sortie (136B) de la colonne principale (136).

6. Système d'analyse de gaz selon une quelconque revendication précédente, dans lequel le système de gestion des fluides est conçu pour prendre une première configuration dans lequel :
- l'alimentation en gaz vecteur (132) est en communication fluidique avec la sortie (134B) de la colonne de rectification (134) par l'intermédiaire de la première conduite (150),
- l'alimentation en gaz vecteur (132) est en communication fluidique avec la colonne principale (136) par l'intermédiaire de la deuxième conduite (152),
et une seconde configuration dans lequel :
- l'alimentation en gaz vecteur (132) est en communication fluidique avec la boucle d'échantillonnage (140),
- l'entrée (134A) de la colonne de rectification (134) est en communication fluidique avec la boucle d'échantillonnage (140),
- la sortie (134B) de la colonne de rectification (134) est en communication fluidique avec l'entrée (136A) de la colonne principale (136).

7. Système d'analyse de gaz selon la revendication précédente, présentant une vanne à orifices multiples (264) conçue pour prendre une première configuration et une seconde configuration, la première configuration du système d'analyse de gaz étant obtenue lorsque la vanne (142) est dans la première configuration et la seconde configuration du système d'analyse de gaz étant obtenue lorsque la vanne (142) est dans la seconde configuration.

8. Système d'analyse de gaz selon une quelconque revendication précédente, dans lequel les composés dignes d'intérêt des alcanes.

9. Installation de forage comportant :
- un dispositif d'échantillonnage (51) destiné à échantillonner un fluide de forage sortant d'un puits de forage,
- un dispositif d'extraction (53) destiné à extraire au moins un composé gazeux à partir du fluide de forage
- un système d'analyse de gaz (130) selon une quelconque revendication précédente.

10. Procédé (200) destiné à faire fonctionner un système d'analyse de gaz (130) selon la revendication 1, le procédé comprenant :
- l'injection (202) d'un premier échantillon dans la boucle d'échantillonnage (140),
- le raccordement de la boucle d'échantillonnage (140) à la colonne de rectification (134) et la séparation du premier échantillon dans la colonne de rectification (134) pour séparer les composés dignes d'intérêt des autres composés sans intérêt,
- le rinçage à contre-courant (204) de la colonne de rectification (134) de sorte que les composés sans intérêt du premier échantillon sont évacués et la séparation simultanée (206) des composés dignes d'intérêt du premier échantillon dans la colonne principale (136), le rinçage à contre-courant de la colonne de rectification (134) étant régulé de sorte que le rinçage à contre-courant est plus court que la séparation dans la colonne principale (136),
dans lequel le procédé comprend également :
- pendant que la colonne de rectification (134) est rincée à contre-courant (204), le remplissage (208) de la boucle d'échantillonnage (140) avec un second échantillon,
- pendant que les composés dignes d'intérêt du premier échantillon sont séparés (206) dans la colonne principale (136), la séparation (210) du second échantillon dans la colonne de rectification (134) .

11. Procédé selon la revendication 10, comprenant le lavage à contre-courant (204) des composés sans intérêt du premier, respectivement du second, échantillon de la colonne de rectification (134) pendant la séparation (210) des composés dignes d'intérêt du premier, respectivement du second, échantillon dans la colonne principale (136).

12. Procédé selon la revendication 10 ou 11, dans laquelle le système d'analyse de gaz est conforme à la revendication 7, le procédé comprenant la configuration du système de gestion des fluides dans une première configuration pour injecter le premier échantillon dans la boucle d'échantillonnage (140), le rinçage à contre-courant de la colonne de rectification (134) et la configuration du système de gestion des fluides dans la seconde configuration pour raccorder la boucle d'échantillonnage (140) à la colonne de rectification (136).
